# EUROPEAN PATENT SPECIFICATION

(11) **EP 3 311 275 B1**
(45) Date of publication and mention of the grant of the patent: **27.01.2021**
(21) Application number: 16812420.4
(22) Date of filing: 16.06.2016
(51) Int. Cl.: G06F 11/00, G05B 19/042

(54) **CONTROL SYSTEM WITH ERROR DETECTION**
STEUERUNGSSYSTEM MIT FEHLERERKENNUNG
SYSTÈME DE COMMANDE AVEC DÉTECTION D'ERREURS

(30) Priority: 17.06.2015 US 201562180896 P
(43) Date of publication of application: 25.04.2018
(73) Proprietor: ABB Schweiz AG, 5400 Baden (CH)
(72) Inventor: MIELNIK, David, Painesville, OH 44077 (US); HEILMAN, Thomas, Wickliffe, OH 44092 (US); PIUNNO, John, Painesville, OH 44077 (US)
(74) Representative: Gregorj S.r.l.
(86) International application number: PCT/US2016/037837
(87) International publication number: WO 2016/205490

(56) References cited:
- WO-A1-2014/155697
- US-A1- 2008 086 250
- US-A1- 2008 211 660
- US-A1- 2013 151 919
- US-A1- 2014 035 481
- US-A1- 2014 301 005

## Description

### BACKGROUND

The present disclosure relates to industrial control systems and more particularly to industrial control systems having a controller and input/output modules that communicate over a module bus.

Industrial control systems, such as distributed control systems, often include one or more controllers that utilize input signals from field devices, such as flow meters, to provide control output signals to final control elements, such as valves, in order to control a process or one or more sub-processes. Known solutions are disclosed in the patent application n° WO2014/155697A1 - Mitsubishi Electric Corp. [JP]- that discloses a PLC system, and in the USA patent application n° US2008/0211660A1 of Takeuchi that discloses a field device system and filed device system diagnosing method. Such control systems are typically module-based and include one or more controller modules and a plurality of input/output (I/O) modules through which the controller module receives and sends input and output signals from and to the field, respectively. The I/O modules communicate with the controller module(s) over one or more module buses. In conventional control systems, when there is a communication failure on the module bus, it is typically not known whether the communication failure was caused by a failure of the module bus or one of the modules. Detecting the source of the communication failure requires extensive testing.

The present disclosure is directed to a control system having error detection.

### SUMMARY

In one aspect of the present disclosure, a process control system includes a module bus and a controller module connected to communicate over the module bus. The controller module is programmed to perform operations for controlling the process using data transmitted over the module bus. The control system further includes a plurality of I/O modules connected to communicate with the controller module over the module bus. Each I/O module includes a microprocessor with memory and a driver for sending information to the module bus. The driver has a high side connected to a voltage source and a low side connected to ground. A sense circuit detects current on the high side of the driver. The microprocessor is operable to execute computer-executable instructions stored in the memory to perform an I/O module error detection method that determines whether the current on the high side of the driver measured by the sense circuit is outside a predetermined high range and, if so, determines that the driver has failed.

In another aspect of the disclosure, a process control system includes a controller module connected to communicate over first and second module buses. The controller module is programmed to perform operations for controlling the process using data transmitted over the module bus. The control system further includes a plurality of I/O modules connected to communicate with the controller module over the first and second module buses. The controller module and each of the I/O modules include a microprocessor with memory and a driver for sending information to the first module bus. The driver has a high side connected to a voltage source and a low side connected to ground. A power sense circuit detects current on the high side of the driver and a ground sense circuit for detecting current on the low side of the driver. The microprocessor is operable to execute computer-executable instructions stored in the memory to perform a module error detection method that includes determining whether a communication error has occurred on the first module bus. If a communication error has occurred on the first module bus, a determination is made whether the current on the high side of the driver measured by the power sense circuit is outside a predetermined high range and whether the current on the low side of the driver measured by the ground sense circuit is outside a predetermined low range. If either the current on the high side of the driver is determined to be outside the predetermined high range or the current on the low side of the driver is determined to be outside the predetermined low range, a determination is made that the driver has failed.

In still another aspect of the disclosure, there is a method of detecting errors in a process control system having a plurality of modules connected to communicate over first and second module buses. Each module has a driver for sending information to the first module bus. The driver has a high side connected to a voltage source and a low side connected to ground. In accordance with the method, a determination is made in each of the modules whether a communication error has occurred on the first module bus. The current is measured on the high side of the driver in each of the modules where a communication error has been determined to have occurred. The current is also measured on the low side of the driver in each of the modules where a communication error has been determined to have occurred. The measured current on the high side of the driver in each of the modules where a high side measurement has been made is compared to a predetermined high range, and the measured current on the low side of the driver in each of the modules where a low side measurement has been made is compared to a predetermined low range. The driver in one of the modules is determined to have failed if either the current on the high side of the driver is outside the predetermined high range or the current on the low side of the driver is outside the predetermined low range.

### BRIEF DESCRIPTION OF THE DRAWINGS

The features, aspects, and advantages of the present disclosure will become better understood with regard to the following description, appended claims, and accompanying drawings where:
Fig. 1 shows a front view of a module row of a control system;

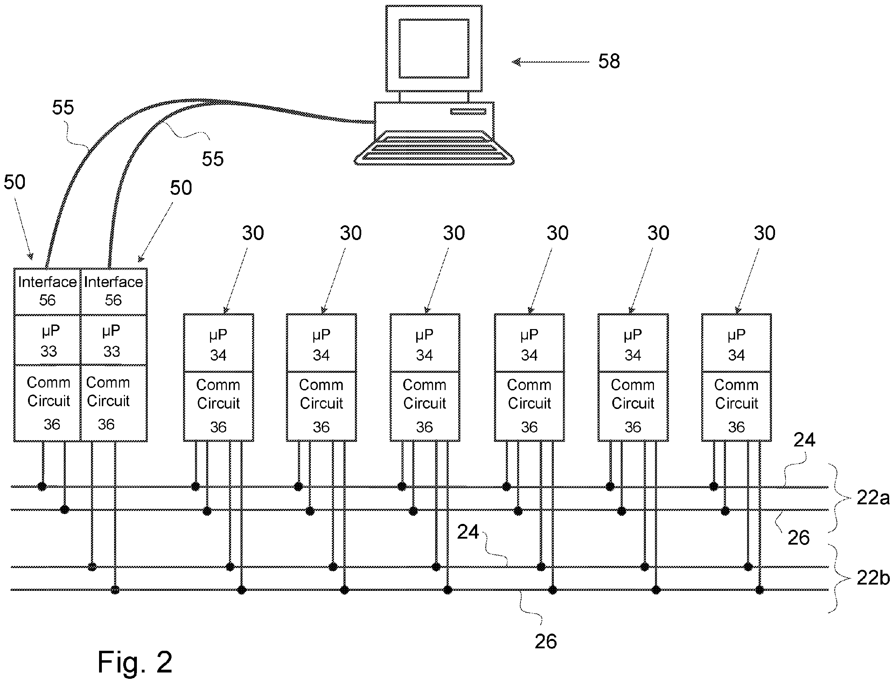

Fig. 2 shows a schematic of the communication connections of the control system;
Fig. 3 shows a communication circuit within the modules;
Fig. 4 shows a flow chart of a module error detection program of the modules; and
Fig. 5 shows a flow chart of a system error detection program of the control system.

### DETAILED DESCRIPTION OF ILLUSTRATIVE EMBODIMENTS

It should be noted that in the detailed description that follows, identical components have the same reference numerals, regardless of whether they are shown in different embodiments of the present disclosure. It should also be noted that in order to be more clear and concise, the drawings may not necessarily be to scale and certain features of an embodiment may be shown in somewhat schematic form.

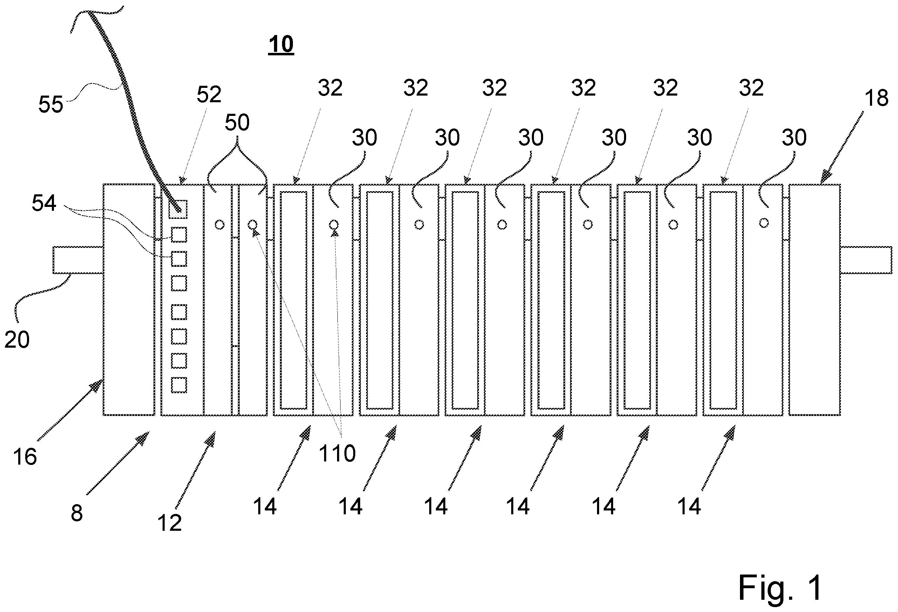

Referring now to FIG. 1, there is shown a schematic view of a module row 8 of a node of an industrial control system 10. The module row 8 comprises a controller assembly 12, a plurality of I/O assemblies 14 and end modules 16, 18 connected to each other and mounted to a top hat DIN rail 20, which may extend horizontally or vertically. The node may include one or more additional module rows, each comprising more I/O assemblies 14 and first and second end modules 16, 18. Each additional module row may be mounted to a separate DIN rail 20. The node may be used to control all or a portion of an industrial process, such as a power generation process. Further, the node may be connected to other nodes of the industrial control system 10, as described more fully below. The module row 8 and other module rows of the control system 10 may be mounted in an enclosure such as a cabinet.

The controller assembly 12 communicates with the I/O assemblies 14 over one or more module buses 22. Typically, a pair of redundant module buses 22a,b are utilized to increase the integrity of the control system 10. Communication among the modules takes place over both of the module buses 22a,b. However, the modules only use data from the primary bus 22a if it is operating properly. If the primary module bus 22a fails, the modules then use the data from the secondary module bus 22b. Each module bus 22 includes a clock line 24 and a data line 26. The data line 26 carries data between the controller assembly 12 and the I/O assemblies 14, while the clock line 24 provides synchronization between the controller assembly 12 and the I/O assemblies 14. The message structure and communication protocol utilized by the controller assembly 12 and the I/O assemblies 14 to communicate over the module buses 22a,b include one or more features for ensuring data integrity, such as a cyclical redundancy check (CRC) feature and/or a checksum feature. For example each message sent over the module buses 22a,b may contain a CRC code, which is based on the remainder of a polynomial division of the message's data block. When the message is received, the receiving device either compares the CRC code of the message with one freshly calculated from the data block, or equivalently, performs a CRC on the whole message and compares the resulting check value with an expected residue constant. If the check values do not match, then the message is determined to contain an error.

Each I/O assembly 14 handles a plurality of inputs and/or a plurality of outputs. A typical control system has a plurality of I/O assemblies 14 handling inputs and/or outputs. The inputs may be analog inputs, digital inputs, thermocouple inputs or RTD inputs. The outputs may be analog outputs or digital outputs. The inputs and outputs (I/O) are typically powered by the sensors and control elements in the field. However, digital outputs may be powered by the I/O assembly 14, such as when the digital outputs are used to energize relay coils.

Each I/O assembly 14 comprises an I/O module 30 releasably mounted to an I/O base 32. Each I/O module 30 includes an outer housing enclosing one or more circuit boards. The circuit board(s) of each I/O module 30 includes a microprocessor 34 with memory and a plurality of communication circuits 36 for communicating over the module buses 22a,b. Conditioning circuitry on the circuit board(s) processes field inputs received from sensors in the field or control outputs received from the controller assembly 12, depending on whether the I/O module 30 handles inputs and/or outputs. More specifically, the conditioning circuitry converts between field signals (e.g., analog 4-20 mA, digital 24VDC etc.) and digital bus signals, such as by using analog-to-digital and/or digital-to-analog converters. The conditioning circuitry also conditions the signals received from or going to the field, such as by using switches, filters and multiplexers, and isolates the field signals from the controller assembly 12.

The controller assembly 12 includes a pair of redundant controller modules 50 releasably mounted to a controller base 52. Each of the controller modules 50 has a construction similar to each I/O module 30 and includes one or more circuit boards mounted inside an outer housing. The circuit board(s) in each controller module 50 includes a microprocessor 33 with memory and a plurality of the communication circuits 36 for communicating over the module buses 22a,b. The memory stores control programs that may be executed by the microprocessor 33 of each controller module 50. The control programs in each controller module 50 include one or more control loops, such as PID loops, which work on one or more field inputs to generate control outputs. The field inputs and control outputs are routed to and from the controller assembly 12 through the I/O assemblies 14 via the module buses 22a,b. Each controller module 50 is programmed with and can execute the same control programs; however, only one of the controller modules 50 (the primary) executes the control programs to control the industrial process at any one time. If the primary controller module 50 fails, the other controller module 50 (the secondary) automatically takes over and executes the control programs to control the industrial process.

The controller base 52 has a plurality of Ethernet jacks 54 that are adapted to receive plugs of Ethernet cables 55, respectively. The Ethernet jacks 54 are connected to Ethernet foreign device interfaces 56 in the controller modules 50. In this manner, the controller modules 50 can communicate with other devices over Ethernet cables 55 plugged into the Ethernet jacks. More specifically, the controller modules 50 can communicate with other controller modules 50 (in other nodes) similarly connected to the Ethernet cables 55, and/or with an operator workstation 58 connected to the Ethernet cables 55. The controllers 50 may use a protocol, such as Modbus TCP, to communicate with other devices connected to the Ethernet cables. The operator workstation 58 may have a graphical user interface (GUI) that displays information from the controller modules 50.

As described above, each I/O module 30 and each controller module 50 includes a plurality of communication circuits 36 for communicating over the module buses 22a,b. More specifically, each I/O module 30 and each controller module 50 has four communication circuits 36, two for each module bus 22, with one being used for the clock line 24 and the other being used for the data line 26 of the module bus 22. Each communication circuit 36 is substantially the same. Thus, for purposes of brevity, only one communication circuit 36 will be shown and described, it being understood that the schematic representation and description apply to the other communication circuits 36 as well.

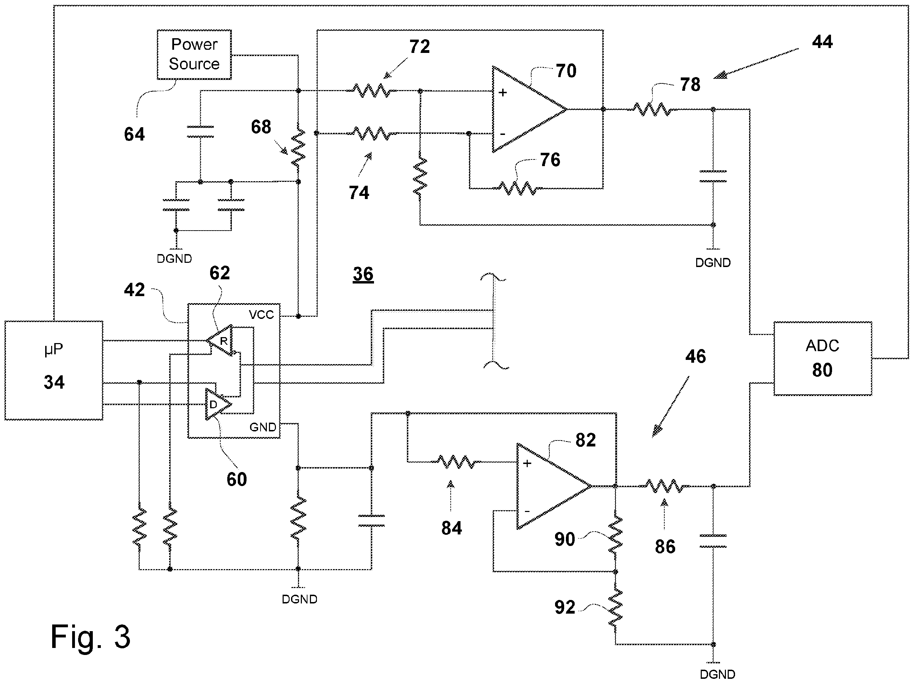

Referring now to Fig.3, there is shown a communication circuit 36, which generally includes a transceiver 42, a power sense circuit 44 and a ground sense circuit 46. The transceiver 42 is connected between the microprocessor 33 or 34 and the module bus 22 and generally includes a driver 60 and a receiver 62. The driver 60 transmits signals from microprocessor 33 or 34 to the module bus 22, while the receiver 62 transmits signals from the module bus 22 to the microprocessor 33 or 34. The power sense circuit 44 is connected to the high side (VCC) of the driver 60, while the ground sense circuit 46 is connected to the low side (GND) of the driver 60.

The power sense circuit 44 is operable to sense the current of the high side of the driver 60, which is connected to a power source 64, such a 3 Volt DC power supply. The power sense circuit 44 may simply comprise a single resistor. Alternately, the power sense circuit 44 may comprise a differential amplifier connected across a main resistor 68. The differential amplifier includes an operational amplifier 70 and resistors 70, 72, 74, 76. An output of the differential amplifier is connected to a gain resistor 78. The differential amplifier 66 and the gain resistor 78 operate to increase the voltage differential across the main resistor 68 to provide a larger range of acceptable operating values. In this manner, an error value (outside the range) is more distinguishable, thereby reducing the number of false error indications. The output from the power sense circuit 44 is an analog signal representative of the current of the high side of the driver 60. This analog signal is fed to an analog-to-digital converter (ADC) 80 that converts the analog signal to a digital signal, which is then fed to the microprocessor 33 or 34.

The ground sense circuit 46 is operable to sense the current of the low side of the driver 60. The ground sense circuit 46 may simply comprise a single resistor. Alternately, the ground sense circuit 46 may comprise a single-ended amplifier connected between gain resistors 84, 86. The single-ended amplifier comprises an operational amplifier 82 with a negative feedback circuit having resistors 90, 92. The single-ended amplifier 82 and gain resistors 84, 86 operate to increase the voltage differential between the low side of the driver 60 and ground to provide a larger range of acceptable operating values. In this manner, an error value (outside the range) is more distinguishable, thereby reducing the number of false error indications. The output from the ground sense circuit 46 is an analog signal representative of the current of the low side of the driver 60. This analog signal is fed to the analog-to-digital converter (ADC) 80 that converts the analog signal to a digital signal, which is then fed to the microprocessor 33 or 34.

The microprocessor 33 in each controller module 50 receives from each of the communications circuits 36 in the controller module 50 the high side current signal generated by the power sense circuit 44 and the low side current signal generated by the ground sense circuit 46. Similarly, the microprocessor 34 in each I/O module 30 receives from each of the communications circuits 36 in the I/O module 30 the high side current signal generated by the power sense circuit 44 and the low side current signal generated by the ground sense circuit 46. Thus, each microprocessor 33, 34 receives more than eight current signals.

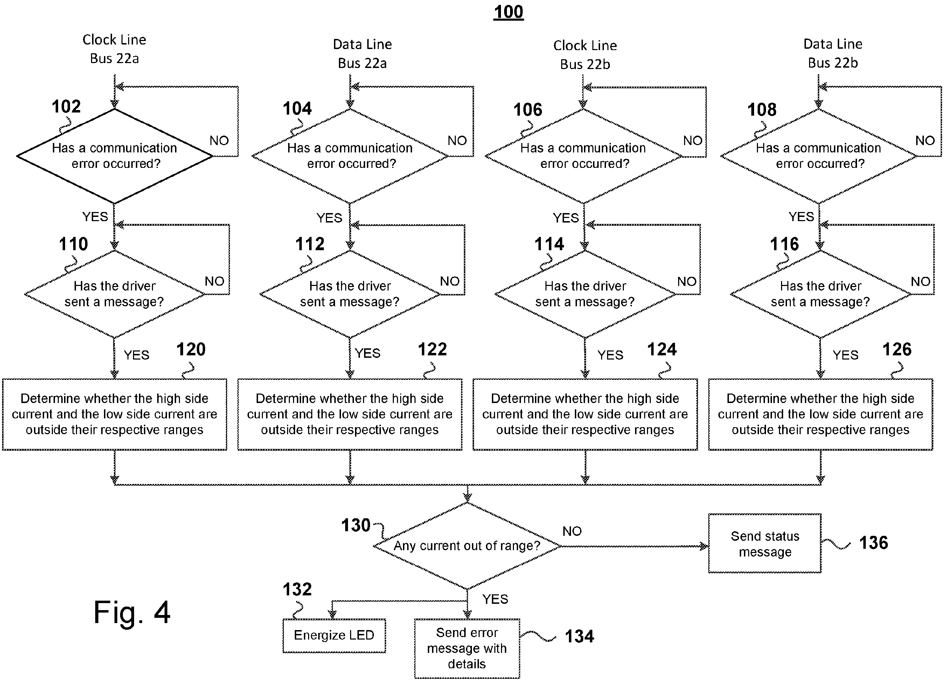

The eight current signals are used by a module error detection program 100 in each I/O module 30 to determine whether one of the drivers 60 of the I/O module 30 has failed (e.g., shorted). In each I/O module 30, the error detection program 100 is stored in memory and executed by the microprocessor 34. With reference now to Fig. 4, the module error detection program 100 initially determines in steps 102, 104, 106, 108 whether a communication error has occurred on the clock lines 24 and/or the data lines 26 of the module buses 22a,b. This determination may be made using a CRC function or other data integrity function. If a communication error has occurred, the program 100 proceeds to step 110, 112, 114 and/or 116, as the case may be, where the program 100 waits until the driver(s) 60 for the faulted line(s) send a message to the faulted line(s). As soon as an affected driver 60 sends a message, the program 100 moves to step 120, 122, 124 and/or 126, as the case may be, where the program 100 determines whether the affected driver 60 has a high side current outside of a high range (such as from about 8 mA to about 14 mA) or a low side current outside of a low range (such as from about 2 mA to about 4 mA). In this regard, it should be noted that the determination of the high side and low side currents should be made contemporaneously with the transmission of a message by the driver 60.

If the affected driver 60 has a high side current outside the high range (such as 7mA or 15mA) or a low side current outside the low range (such as 1 ma or 5mA), it is determined that the affected driver 60 has failed . In step 130, the program 100 determines whether any of the drivers 60 has a high side current or a low side current that is out of range. If one or more of the drivers 60 has a current out of range, the program 100 energizes a red LED 110 on the I/O module 30 in step 132 to provide a visual indication of the error. In addition, the program 100 in step 134 transmits an error message to the primary controller module 50a over the module bus 22a,b that does not have the communication error. The error message includes the address of the I/O module 30 and informs the primary controller module 50a that a communication error was detected and that one of the drivers 60 has been determined to have failed. The error message may also identify the line (clock or data), whose driver 60 has failed. If in step 130, the program 100 determines that none of the drivers 60 has a high side current or a low side current that is out of range, the error detection program 100 in step 136 transmits a status message to the primary controller module 50a over the module bus 22a,b that does not have the communication error. The status message includes the address of the I/O module 30 and informs the primary controller module 50a that a communication error was detected, but none of the drivers 60 in the I/O module 30 have been determined to have failed.

Each controller module 50 also has a module error detection program stored in memory. However, only the primary controller module 50a executes the program (with its microprocessor 33) to determine whether one of its drivers 60 has failed. The module error detection program in each controller module 50 is the same as the error detection program 100 utilized in the I/O modules 30, except it does not include steps 134 and 136.

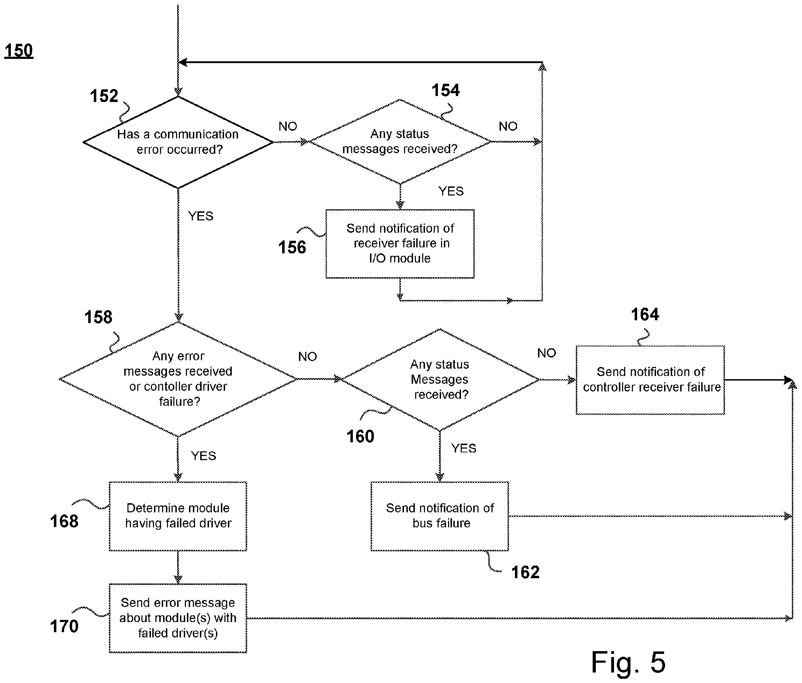

In addition to its module error detection program, each controller module 50 also has a system error detection program 150 stored in memory. However, only the primary controller module 50a executes the system error detection program 150 (with its microprocessor 33). Referring now to Fig. 5, the system error detection program 150 initially determines in step 152 whether a communication error has occurred on the clock lines 24 and/or the data lines 26 of the module buses 22a,b. If no communication error has occurred, the program 150 proceeds to step 154 to determine whether any status messages from the I/O modules 30 have been received. If a status message has been received from an I/O module 30 (indicating that the I/O module 30 has detected a communication error, but that no drivers 60 have been determined to have failed), then the program 150 determines that a receiver 62 in the I/O module 30 may have failed (e.g. shorted). In step 156, the primary controller module 50a sends a notification of this error (and identifying the affected I/O module 30) to the operator workstation 58, where it may be displayed on the GUI.

If in step 152, the program 150 determines that a communication error on a particular bus 22a,b has occurred, the program 150 proceeds to step 158 to determine whether it has received an error message from one of the I/O modules 30 or if the module detection program of the primary controller module 50a has determined that one of its drivers 60 has failed. If no error message has been received and the module detection program of the primary controller module 50a has determined that none of its drivers 60 have failed, then the program 150 proceeds to step 160, where the program 150 determines whether any status messages have been received. If one or more status messages have been received, the program 150 determines that the particular bus 22a,b itself may have failed and sends a notification of this error in step 162 to the operator workstation 58, where it may be displayed on the GUI. If, in step 160, no status messages have been received, the program 150 determines that one of the receivers 62 of the primary controller module 50a may have failed. In step 164, the primary controller module 50a sends a notification of this error to the operator workstation 58, where it may be displayed on the GUI.

If in step 158, the program 150 determines it has received one or more error messages from the I/O modules 30 or the controller's own module detection program has determined that one or more of its drivers 60 have failed, then the program 150 proceeds to step 168, where the program 150 determines the module(s) having a failed driver 60. In step170, the primary controller module 50a sends an error message identifying the module(s) having a failed driver 60 to the operator workstation 58, where it may be displayed on the GUI.

It is to be understood that the description of the foregoing exemplary embodiment(s) is (are) intended to be only illustrative, rather than exhaustive, of the present disclosure. Those of ordinary skill will be able to make certain additions, deletions, and/or modifications to the embodiment(s) of the disclosed subject matter. For example, each receiver 62 in the controller modules 50 and the I/O modules 30 may be provided with a power sense circuit 44 and a ground sense circuit 46 for detecting current on the high and lows sides of the receiver 62, respectively. However, it has been determined that doing so is typically not needed because most communication errors are caused by a failure of a driver. Thus, a typical control system provided in accordance with this disclosure does not include sense circuits for the receivers in its modules.

## Claims

1. A control system (10) for controlling a process, the control system (10) comprising:
a module bus (22, 22a, 22b) over which information may be transmitted;
a controller module (50) connected to communicate over the module bus (22, 22a, 22b), the controller module (50) being programmed to perform operations for controlling the process using data transmitted over the module bus (22, 22a, 22b);
a plurality of I/O modules (30) connected to communicate with the controller module (50) over the module bus (22, 22a, 22b),
each I/O module (30) including:
a microprocessor (34) with memory;
a driver (60) for sending information to the module bus (22, 22a, 22b), said driver (60) having a high side connected to a voltage source (64) and a low side connected to ground; and
a sense circuit (44) for detecting current on the high side of the driver (60);
**characterized in that** the microprocessor (34) is operable to execute computer-executable instructions stored in the memory to perform an I/O module error detection method (100) that comprises determining (102,104,106,108) in each of the I/O modules (30) whether a communication error has occurred on the module bus (22, 22a, 22b) and where the communication error has been determined to have occurred determining (120,122,124,126) whether the current on the high side of the driver (60) measured by the sense circuit (44) is outside of a predetermined high range and, if so, determining (130,132,134) that the driver (60) of the respective module (30) has failed.

2. The control system (10) of claim 1, **characterized in that** the step (102,104,106,108) of determining whether a communication error has occurred on the module bus (22, 22a, 22b) is performed using a cyclical redundancy check function.

3. The control system (10) of claim 1, **characterized in that** the sense circuit (44) is a power sense circuit and wherein each I/O module (30) further includes a ground sense circuit (46) for detecting current on the low side of the driver (60), and wherein the I/O module error detection method (100) further comprises determining (120,122,124,126) whether the current on the low side of the driver (60) measured by the ground sense circuit (46) is outside a predetermined low range and, if so, determining (130,132,134) that the driver (60) has failed.

4. The control system (10) of claim 3, **characterized in that** the I/O module error detection method (100) further comprises determining (102) whether a communication error has occurred on the module bus (22, 22a, 22b) and, if so, then performing the steps of determining (120) whether the current on the high side of the driver (60) measured by the power sense circuit (44) is outside a predetermined high range and whether the current on the low side of the driver (60) measured by the ground sense circuit (46) is outside a predetermined low range.

5. The control system (10) of claim 1, **characterized in that** the module bus (22, 22a, 22b) is a first module bus (22a);
wherein the driver is a first driver (60) for sending information to the first module bus (22a) and the sense circuit (44) is a first sense circuit for detecting current on the high side of the first driver (60);
wherein the control system (10) comprises a second module bus (22b);
wherein the I/O modules (30) each further comprise:
a second driver (60) for interfacing with the second module bus (22b), the second driver (60) having a high side connected to the voltage source and a low side connected to ground;
a second sense circuit (44) for detecting current on the high side of the second driver (60);
wherein the I/O module error detection method (100) further comprises determining (122) whether the current on the high side of the second driver (60) measured by the second sense circuit (44) is outside the predetermined high range and, if so, determining that the second driver (60) has failed.

6. The control system (10) of claim 5, **characterized in that** the I/O module error detection method (100) further comprises:
sending (134) an error message about the failure of the first driver (60) over the second module bus (22b) to the controller module (50) if the first driver (60) is determined to have failed; and
sending (134) an error message about the failure of the second driver (60) over the first module bus (22a) to the controller module (50) if the second driver (60) is determined to have failed.

7. The control system (10) of claim 5, **characterized in that** the first and second sense circuits (44) are first and second power sense circuits and wherein each I/O module (30) further includes first and second ground sense circuits (46) for detecting current on the low side of the first and second drivers (60), respectively, and wherein the I/O module error detection method (100) further comprises:
determining (120,122) whether the current on the low side of the first driver (60) measured by the first ground sense circuit (46) is outside the predetermined low range and, if so, determining that the first driver (60) has failed; and
determining (124,126) whether the current on the low side of the second driver (60) measured by the second ground sense circuit (46) is outside the predetermined low range and, if so, determining that the second driver (60) has failed.

8. The control system (10) of claim 7, **characterized in that** the I/O module error detection method (100) further comprises:
determining (102,104) whether a communication error has occurred on the first module bus (22a) and, if so, then performing the steps of determining (120,122) whether the current on the high side of the first driver (60) measured by the first power sense circuit is outside the predetermined high range and whether the current on the low side of the first driver (60) measured by the first ground sense circuit (46) is outside the predetermined low range; and
determining (106,108) whether a communication error has occurred on the second module bus (22b) and, if so, then performing the steps of determining (124,126) whether the current on the high side of the second driver (60) measured by the second power sense circuit is outside the predetermined high range and whether the current on the low side of the second driver (60) measured by the second ground sense circuit (46) is outside the predetermined low range.

9. The control system (10) of claim 8, **characterized in that** the controller module (50) comprises:
a microprocessor (33) with memory;
first and second drivers (60) for interfacing with the first and second module buses (22a, 22b) respectively, each of the first and second drivers (60) having a high side connected to a voltage source and a low side connected to ground;
a first power sense circuit (44) for detecting current on the high side of the first driver (60);
a ground sense circuit (46) for detecting current on the low side of the driver (60); and
wherein the microprocessor (33) is operable to execute computer-executable instructions stored in the memory to perform a controller module error detection method (100, 150) that comprises:
determining (102, 104,106,108) whether communication errors have occurred on the first and second buses (22a, 22b), respectively;
determining (120,122) whether the current on the high side of the first driver (60) measured by the first power sense circuit (44) is outside a predetermined high range if a communication error has occurred on the first bus (22a) ;
determining (120,122) whether the current on the low side of the first driver (60) measured by the first ground sense circuit (46) is outside a predetermined low range if a communication error has occurred on the first bus (22a) ;
determining (130,132,134) that the first driver (60) has failed if either the current on the high side of the first driver (60) is outside the predetermined high range or the current on the low side of the first driver (60) is outside the predetermined low range;
determining (124,126) whether the current on the high side of the second driver (60) measured by the second power sense circuit is outside the predetermined high range if a communication error has occurred on the second bus (22b);
determining (124,126) whether the current on the low side of the second driver (60) measured by the second ground sense circuit (46) is outside the predetermined low range if a communication error has occurred on the second bus (22b); and
determining (130,132,134) that the second driver (60) has failed if either the current on the high side of the second driver (60) is outside the predetermined high range or the current on the low side of the second driver (60) is outside the predetermined low range.

10. The control system (10) of claim 1, **characterized in that**
the module bus (22, 22a, 22b) comprises a first module bus (22a) and a second module bus (22b) over which information may be transmitted, the controller module (50) being connected to communicate over the first and second module buses (22a, 22b) and programmed to perform operations for controlling the process using data transmitted over one or more of the first and second module buses (22a, 22b); and
wherein the plurality of I/O modules (30) are connected to communicate with the controller module (50) over the first and second module buses (22a, 22b);
wherein the controller module (50) comprises:
a microprocessor (33) with memory;
a driver (60) for sending information to the first module bus (22a) and having a high side connected to a voltage source and a low side connected to ground; and
a sense circuit (44) for detecting current on the high side of the driver (60); wherein the sense circuit (44) of each I/O module (30) and the controller module (50) is a power sense circuit;
wherein each I/O module (30) and the controller module (50) further comprise a ground sense circuit (46) for detecting current on the low side of the driver (60); and
wherein the microprocessor (33) of the controller module (50) is operable to execute computer-executable instructions stored in the memory to perform a module error detection method (150) that comprises:
determining (102,104) whether a communication error has occurred on the first module bus (22a);
if a communication error has occurred on the first module bus (22a), determining (120,122) whether the current on the high side of the driver (60) measured by the power sense circuit (44) is outside a predetermined high range and whether the current on the low side of the driver (60) measured by the ground sense circuit (46) is outside a predetermined low range; and
if either the current on the high side of the driver (60) is determined to be outside the predetermined high range or the current on the low side of the driver (60) is determined to be outside the predetermined low range, determining (130) that the driver (60) has failed.

11. The control system (10) of claim 10, **characterized in that** the module error detection method (100) in the I/O modules (30) further comprises:
sending (134) an error message to the controller module (50) over the second module bus (22b) if the driver (60) is determined to have failed; and
sending a status message (136) to the controller module (50) over the second module bus (22b) if the driver (60) is determined not to have failed.

12. The control system (10) of claim 11, **characterized in that** further comprises a work station (58) comprising a graphical user interface, and wherein the microprocessor (33) in the controller module (50) executes computer-executable instructions stored in the memory to perform a system error detection method (150) that comprises:
determining (152) whether a communication error has occurred on the first module bus (22a);
determining (158) whether any error messages have been received and whether the driver (60) of the controller module (50) is determined to have failed if a communication error is determined to have occurred;
determining (160) whether any status messages have been received if it is determined that no error messages have been received and the driver (60) of the controller module (50) has not failed;
determining (162) that the first module bus (22a) has failed if it is determined that one or more status messages have been received; and
sending (170) a message to the work station (58) that the module bus (22a) has been determined to have failed.

13. The control system (10) of claim 12, **characterized in that** the controller module (50) and the I/O modules (30) each further comprise a receiver (60) for receiving information from the first module bus (22a), and wherein the system error detection method (150) further comprises:
determining (156) that the receiver (60) of the I/O module (30) has failed if it is determined that a communication error has not occurred and it is determined that a status message has been received from an I/O module (30); and
sending (170) a message to the work station that the receiver (60) of the I/O module (30) has been determined to have failed.

14. A method of detecting errors in a process control system (10) having a plurality of I/O modules (30) connected to communicate over a module bus (22, 22a, 22b), each I/O module (30) has a driver (60) for sending information to the module bus (22, 22a, 22b) and has a high side connected to a voltage source (64) and a low side connected to ground, the method **characterized by** comprising:
determining (102, 104, 106, 108) in each of the I/O modules (30) whether a communication error has occurred on the module bus (22, 22a, 22b);
measuring the current on the high side of the driver (60) in each of the I/O modules (30) where a communication error has been determined to have occurred;
comparing (120, 122, 124, 126) the measured current on the high side of the driver (60) in each of the I/O modules (30) where a high side measurement has been made to a predetermined high range;
and
determining (130) that the driver (60) of the respective I/O module (30) has failed if the current on the high side of the driver (60) is outside the predetermined high range.

15. The method of claim 14, **characterized by** further comprising:
measuring the current on the low side of the driver (60) in each of the I/O modules (30) where a communication error has been determined to have occurred;
comparing (120, 122, 124, 126) the measured current on the low side of the driver (60) in each of the I/O modules (30) where a low side measurement has been made to a predetermined low range;
determining (130) that the driver (60) of the respective module (30) has failed if either the current on the high side of the driver (60) is outside the predetermined high range or the current on the low side of the driver (60) is outside the predetermined low range.

16. The method of claim 15, **characterized by** further comprising:
in each of the I/O modules (30), after a communication error is determined to have occurred, determining (110, 112, 114, 116) when a message is sent by the driver (60); and
wherein in each of the I/O modules (30) where a communication error has been determined to have occurred, the steps of measuring the currents on the high and low sides of the driver (60) are performed when a message is determined to have been sent by the driver (60); or
further comprising determining that the module bus (22, 22a, 22b) has failed if more than one of the I/O modules (30) detects a communication error on the module bus (22, 22a, 22b) and none of the drivers (60) in the I/O modules (30) are determined to have failed.

## Patentansprüche

1. Steuerungssystem (10) zum Steuern eines Prozesses, wobei das Steuerungssystem (10) Folgendes umfasst:
einen Modulbus (22, 22a, 22b), über den Informationen übertragen werden können;
ein Steuerungsmodul (50), das so angeschlossen ist, dass es über den Modulbus (22, 22a, 22b) kommuniziert, wobei das Steuerungsmodul (50) so programmiert ist, dass es Operationen zum Steuern des Prozesses unter Verwendung von über den Modulbus (22, 22a, 22b) übertragenen Daten durchführt;
mehrere E/A-Module (30), die so angeschlossen sind, dass sie mit dem Steuerungsmodul (50) über den Modulbus (22, 22a, 22b) kommunizieren,
wobei jedes E/A-Modul (30) Folgendes beinhaltet:
einen Mikroprozessor (34) mit Speicher;
einen Treiber (60) zum Senden von Informationen an den Modulbus (22, 22a, 22b), wobei der Treiber (60) eine an eine Spannungsquelle (64) angeschlossene High-Seite und eine an Masse angeschlossene Low-Seite aufweist; und
eine Erfassungsschaltung (44) zum Erkennen von Strom auf der High-Seite des Treibers (60);
**dadurch gekennzeichnet, dass** der Mikroprozessor (34) so betreibbar ist, dass er in dem Speicher gespeicherte computerausführbare Befehle ausführt, um ein E/A-Modul-Fehlererkennungsverfahren (100) durchzuführen, das das Bestimmen (102, 104, 106, 108) in jedem der E/A-Module (30) umfasst, ob ein Kommunikationsfehler auf dem Modulbus (22, 22a, 22b) aufgetreten ist und, wenn bestimmt wurde, dass der Kommunikationsfehler aufgetreten ist, Bestimmen (120, 122, 124, 126), ob der von der Erfassungsschaltung (44) gemessene Strom auf der High-Seite des Treibers (60) außerhalb eines vorbestimmten High-Bereichs liegt, und, wenn dies der Fall ist, Bestimmen (130, 132, 134), dass der Treiber (60) des jeweiligen Moduls (30) ausgefallen ist.

2. Steuerungssystem (10) nach Anspruch 1, **dadurch gekennzeichnet, dass** der Schritt (102, 104, 106, 108) des Bestimmens, ob ein Kommunikationsfehler auf dem Modulbus (22, 22a, 22b) aufgetreten ist, unter Verwendung einer zyklischen Redundanzprüffunktion durchgeführt wird.

3. Steuerungssystem (10) nach Anspruch 1, **dadurch gekennzeichnet, dass** die Erfassungsschaltung (44) eine Leistungserfassungsschaltung ist, und wobei jedes E/A-Modul (30) ferner eine Masse-Erfassungsschaltung (46) zum Erkennen von Strom an der Low-Seite des Treibers (60) beinhaltet, und wobei das E/A-Modul-Fehlererkennungsverfahren (100) ferner das Bestimmen (120, 122, 124, 126) umfasst, ob der von der Masse-Erfassungsschaltung (46) gemessene Strom auf der Low-Seite des Treibers (60) außerhalb eines vorbestimmten Low-Bereichs liegt, und, wenn dies der Fall ist, das Bestimmen (130, 132, 134), dass der Treiber (60) ausgefallen ist.

4. Steuerungssystem (10) nach Anspruch 3, **dadurch gekennzeichnet, dass** das E/A-Modul-Fehlererkennungsverfahren (100) ferner Folgendes umfasst: Bestimmen (102), ob ein Kommunikationsfehler am Modulbus (22, 22a, 22b) aufgetreten ist, und wenn ja, dann Durchführen der Schritte des Bestimmens (120), ob der von der Leistungserfassungsschaltung (44) gemessene Strom auf der High-Seite des Treibers (60) außerhalb eines vorbestimmten High-Bereichs liegt und ob der von der Masse-Erfassungsschaltung (46) gemessene Strom auf der Low-Seite des Treibers (60) außerhalb eines vorbestimmten Low-Bereichs liegt.

5. Steuerungssystem (10) nach Anspruch 1, **dadurch gekennzeichnet, dass** der Modulbus (22, 22a, 22b) ein erster Modulbus (22a) ist;
wobei der Treiber ein erster Treiber (60) zum Senden von Informationen an den ersten Modulbus (22a) ist und die Erfassungsschaltung (44) eine erste Erfassungsschaltung zum Erkennen von Strom auf der High-Seite des ersten Treibers (60) ist;
wobei das Steuerungssystem (10) einen zweiten Modulbus (22b) umfasst;
wobei die E/A-Module (30) ferner jeweils Folgendes umfassen:
einen zweiten Treiber (60) zum Verbinden mit dem zweiten Modulbus (22b), wobei der zweite Treiber (60) eine an die Spannungsquelle angeschlossene High-Seite und eine an Masse angeschlossene Low-Seite aufweist;
eine zweite Erfassungsschaltung (44) zum Erkennen von Strom auf der High-Seite des zweiten Treibers (60);
wobei das E/A-Modul-Fehlererkennungsverfahren (100) ferner das Bestimmen (122) umfasst, ob der von der zweiten Erfassungsschaltung (44) gemessene Strom auf der High-Seite des zweiten Treibers (60) außerhalb des vorbestimmten High-Bereichs liegt, und, wenn dies der Fall ist, das Bestimmen, dass der zweite Treiber (60) ausgefallen ist.

6. Steuerungssystem (10) nach Anspruch 5, **dadurch gekennzeichnet, dass** das E/A-Modul-Fehlererkennungsverfahren (100) ferner Folgendes umfasst:
Senden (134) einer Fehlermeldung über den Ausfall des ersten Treibers (60) über den zweiten Modulbus (22b) an das Steuerungsmodul (50), wenn bestimmt wird, dass der erste Treiber (60) ausgefallen ist; und
Senden (134) einer Fehlermeldung über den Ausfall des zweiten Treibers (60) über den ersten Modulbus (22a) an das Steuerungsmodul (50), wenn bestimmt wird, dass der zweite Treiber (60) ausgefallen ist.

7. Steuerungssystem (10) nach Anspruch 5, **dadurch gekennzeichnet, dass** die erste und die zweite Erfassungsschaltung (44) eine erste und eine zweite Leistungserfassungsschaltung sind, und wobei jedes E/A-Modul (30) ferner eine erste und eine zweite Masse-Erfassungsschaltung (46) zum Erkennen von Strom auf der Low-Seite des ersten bzw. des zweiten Treibers (60) beinhaltet, und wobei das E/A-Modul-Fehlererkennungsverfahren (100) ferner Folgendes umfasst:
Bestimmen (120, 122), ob der von der ersten Masse-Erfassungsschaltung (46) gemessene Strom auf der Low-Seite des ersten Treibers (60) außerhalb des vorbestimmten Low-Bereichs liegt, und falls ja, Bestimmen, dass der erste Treiber (60) ausgefallen ist; und
Bestimmen (124, 126), ob der von der zweiten Masse-Erfassungsschaltung (46) gemessene Strom auf der Low-Seite des zweiten Treibers (60) außerhalb des vorbestimmten Low-Bereichs liegt, und falls ja, Bestimmen, dass der zweite Treiber (60) ausgefallen ist.

8. Steuerungssystem (10) nach Anspruch 7, **dadurch gekennzeichnet, dass** das E/A-Modul-Fehlererkennungsverfahren (100) ferner Folgendes umfasst:
Bestimmen (102, 104), ob ein Kommunikationsfehler am ersten Modulbus (22a) aufgetreten ist, und wenn ja, dann Durchführen der Schritte des Bestimmens (120, 122), ob der Strom auf der High-Seite des ersten Treibers (60), gemessen durch die erste Leistungserfassungsschaltung, außerhalb des vorbestimmten High-Bereichs liegt und ob der Strom auf der Low-Seite des ersten Treibers (60), gemessen durch die erste Masse-Erfassungsschaltung (46), außerhalb des vorbestimmten Low-Bereichs liegt; und
Bestimmen (106, 108), ob ein Kommunikationsfehler am zweiten Modulbus (22b) aufgetreten ist, und wenn ja, dann Durchführen der Schritte des Bestimmens (124, 126), ob der von der zweiten Leistungserfassungsschaltung gemessene Strom auf der High-Seite des zweiten Treibers (60) außerhalb des vorbestimmten High-Bereichs liegt und ob der von der zweiten Masse-Erfassungsschaltung (46) gemessene Strom auf der Low-Seite des zweiten Treibers (60) außerhalb des vorbestimmten Low-Bereichs liegt.

9. Steuerungssystem (10) nach Anspruch 8, **dadurch gekennzeichnet, dass** das Steuerungsmodul (50) Folgendes umfasst:
einen Mikroprozessor (33) mit Speicher;
erste und zweite Treiber (60) zum Verbinden mit dem ersten bzw. zweiten Modulbus (22a, 22b), wobei jeder der ersten und zweiten Treiber (60) eine an eine Spannungsquelle angeschlossene High-Seite und eine an Masse angeschlossene Low-Seite aufweist;
eine erste Leistungserfassungsschaltung (44) zum Erkennen von Strom auf der High-Seite des ersten Treibers (60);
eine Masse-Erfassungsschaltung (46) zum Erkennen von Strom auf der Low-Seite des Treibers (60); und
wobei der Mikroprozessor (33) so betreibbar ist, dass er in dem Speicher gespeicherte computerausführbare Befehle ausführt, um ein Steuerungsmodul-Fehlererkennungsverfahren (100, 150) durchzuführen, das Folgendes umfasst:
Bestimmen (102, 104, 106, 108), ob an dem jeweils ersten und zweiten Bus (22a, 22b) Kommunikationsfehler aufgetreten sind;
Bestimmen (120, 122), ob der von der ersten Leistungserfassungsschaltung (44) gemessene Strom auf der High-Seite des ersten Treibers (60) außerhalb eines vorbestimmten High-Bereichs liegt, wenn ein Kommunikationsfehler am ersten Bus (22a) aufgetreten ist;
Bestimmen (120, 122), ob der von der ersten Masse-Erfassungsschaltung (46) gemessene Strom auf der Low-Seite des ersten Treibers (60) außerhalb eines vorbestimmten Low-Bereichs liegt, wenn ein Kommunikationsfehler am ersten Bus (22a) aufgetreten ist;
Bestimmen (130, 132, 134), dass der erste Treiber (60) ausgefallen ist, wenn entweder der Strom auf der High-Seite des ersten Treibers (60) außerhalb des vorbestimmten High-Bereichs liegt oder der Strom auf der Low-Seite des ersten Treibers (60) außerhalb des vorbestimmten Low-Bereichs liegt;
Bestimmen (124, 126), ob der von der zweiten Leistungserfassungsschaltung gemessene Strom auf der High-Seite des zweiten Treibers (60) außerhalb des vorbestimmten High-Bereichs liegt, wenn ein Kommunikationsfehler am zweiten Bus (22b) aufgetreten ist;
Bestimmen (124, 126), ob der von der zweiten Masse-Erfassungsschaltung (46) gemessene Strom auf der Low-Seite des zweiten Treibers (60) außerhalb des vorbestimmten Low-Bereichs liegt, wenn ein Kommunikationsfehler am zweiten Bus (22b) aufgetreten ist; und
Bestimmen (130, 132, 134), dass der zweite Treiber (60) ausgefallen ist, wenn entweder der Strom auf der High-Seite des zweiten Treibers (60) außerhalb des vorbestimmten High-Bereichs liegt oder der Strom auf der Low-Seite des zweiten Treibers (60) außerhalb des vorbestimmten Low-Bereichs liegt.

10. Steuerungssystem (10) nach Anspruch 1, **dadurch gekennzeichnet, dass** der Modulbus (22, 22a, 22b) einen ersten Modulbus (22a) und einen zweiten Modulbus (22b) umfasst, über welche Informationen übertragen werden können, wobei das Steuerungsmodul (50) angeschlossen ist, um über den ersten und zweiten Modulbus (22a, 22b) zu kommunizieren, und programmiert ist, um Operationen zum Steuern des Prozesses unter Verwendung von Daten durchzuführen, die über einen oder mehrere des ersten und zweiten Modulbusses (22a, 22b) übertragen werden; und
wobei die mehreren E/A-Module (30) angeschlossen sind, um mit dem Steuerungsmodul (50) über den ersten und zweiten Modulbus (22a, 22b) zu kommunizieren;
wobei das Steuerungsmodul (50) Folgendes umfasst:
einen Mikroprozessor (33) mit Speicher;
einen Treiber (60) zum Senden von Informationen an den ersten Modulbus (22a) und mit einer High-Seite, die an eine Spannungsquelle angeschlossen ist, und einer Low-Seite, die an Masse angeschlossen ist; und
eine Erfassungsschaltung (44) zum Erkennen von Strom auf der High-Seite des Treibers (60);
wobei die Erfassungsschaltung (44) jedes E/A-Moduls (30) und des Steuerungsmoduls (50) eine Leistungserfassungsschaltung ist;
wobei jedes E/A-Modul (30) und das Steuerungsmodul (50) ferner eine Masse-Erfassungsschaltung (46) zum Erkennen von Strom auf der Low-Seite des Treibers (60) umfasst; und
wobei der Mikroprozessor (33) des Steuerungsmoduls (50) so betreibbar ist, dass er in dem Speicher gespeicherte computerausführbare Befehle ausführt, um ein Modul-Fehlererkennungsverfahren (150) durchzuführen, das Folgendes umfasst:
Bestimmen (102, 104), ob ein Kommunikationsfehler am ersten Modulbus (22a) aufgetreten ist;
wenn ein Kommunikationsfehler am ersten Modulbus (22a) aufgetreten ist, Bestimmen (120, 122), ob der von der Leistungserfassungsschaltung (44) gemessene Strom auf der High-Seite des Treibers (60) außerhalb eines vorbestimmten High-Bereichs liegt und ob der von der Masse-Erfassungsschaltung (46) gemessene Strom auf der Low-Seite des Treibers (60) außerhalb eines vorbestimmten Low-Bereichs liegt; und
wenn entweder bestimmt wird, dass der Strom auf der High-Seite des Treibers (60) außerhalb des vorbestimmten High-Bereichs liegt oder dass der Strom auf der Low-Seite des Treibers (60) außerhalb des vorbestimmten Low-Bereichs liegt, Bestimmen (130), dass der Treiber (60) ausgefallen ist.

11. Steuerungssystem (10) nach Anspruch 10, **dadurch gekennzeichnet, dass** das Modul-Fehlererkennungsverfahren (100) in den E/A-Modulen (30) ferner Folgendes umfasst:
Senden (134) einer Fehlermeldung an das Steuerungsmodul (50) über den zweiten Modulbus (22b), wenn bestimmt wird, dass der Treiber (60) ausgefallen ist; und
Senden einer Statusmeldung (136) an das Steuerungsmodul (50) über den zweiten Modulbus (22b), wenn bestimmt wird, dass der Treiber (60) nicht ausgefallen ist.

12. Steuerungssystem (10) nach Anspruch 11, **dadurch gekennzeichnet, dass** es ferner eine Arbeitsstation (58) mit einer graphischen Benutzeroberfläche umfasst, und wobei der Mikroprozessor (33) im Steuerungsmodul (50) im Speicher gespeicherte computerausführbare Befehle ausführt, um ein Systemfehlererkennungsverfahren (150) durchzuführen, das Folgendes umfasst:
Bestimmen (152), ob ein Kommunikationsfehler am ersten Modulbus (22a) aufgetreten ist;
Bestimmen (158), ob Fehlermeldungen empfangen wurden und ob der Treiber (60) des Steuerungsmoduls (50) als ausgefallen bestimmt wird, wenn bestimmt wird, dass ein Kommunikationsfehler aufgetreten ist;
Bestimmen (160), ob Statusmeldungen empfangen wurden, wenn bestimmt wird, dass keine Fehlermeldungen empfangen wurden und der Treiber (60) des Steuerungsmoduls (50) nicht ausgefallen ist;
Bestimmen (162), dass der erste Modulbus (22a) ausgefallen ist, wenn bestimmt wird, dass eine oder mehrere Statusmeldungen empfangen wurden; und
Senden (170) einer Meldung an die Arbeitsstation (58), dass bestimmt wurde, dass der Modulbus (22a) ausgefallen ist.

13. Steuerungssystem (10) nach Anspruch 12, **dadurch gekennzeichnet, dass** das Steuerungsmodul (50) und die E/A-Module (30) jeweils ferner einen Empfänger (60) zum Empfangen von Informationen von dem ersten Modulbus (22a) umfassen, und wobei das Systemfehlererkennungsverfahren (150) ferner Folgendes umfasst:
Bestimmen (156), dass der Empfänger (60) des E/A-Moduls (30) ausgefallen ist, wenn bestimmt wird, dass kein Kommunikationsfehler aufgetreten ist und bestimmt wird, dass eine Statusmeldung von einem E/A-Modul (30) empfangen wurde; und
Senden (170) einer Meldung an die Arbeitsstation, dass bestimmt wurde, dass der Empfänger (60) des E/A-Moduls (30) ausgefallen ist.

14. Verfahren zum Erkennen von Fehlern in einem Prozesssteuerungssystem (10), das mehrere E/A-Module (30) aufweist, die so angeschlossen sind, dass sie über einen Modulbus (22, 22a, 22b) kommunizieren, wobei jedes E/A-Modul (30) einen Treiber (60) zum Senden von Informationen an den Modulbus (22, 22a, 22b) aufweist und eine an eine Spannungsquelle (64) angeschlossene High-Seite und eine an Masse angeschlossene Low-Seite aufweist, wobei das Verfahren **dadurch gekennzeichnet ist, dass** es Folgendes umfasst:
Bestimmen (102, 104, 106, 108) in jedem der E/A-Module (30), ob am Modulbus (22, 22a, 22b) ein Kommunikationsfehler aufgetreten ist;
Messen des Stroms auf der High-Seite des Treibers (60) in jedem der E/A-Module (30), bei dem bestimmt wurde, dass ein Kommunikationsfehler aufgetreten ist;
Vergleichen (120, 122, 124, 126) des gemessenen Stroms auf der High-Seite des Treibers (60) in jedem der E/A-Module (30), wo eine High-Seiten-Messung in einem vorbestimmten High-Bereich durchgeführt wurde; und
Bestimmen (130), dass der Treiber (60) des jeweiligen E/A-Moduls (30) ausgefallen ist, wenn der Strom auf der High-Seite des Treibers (60) außerhalb des vorbestimmten High-Bereichs liegt.

15. Verfahren nach Anspruch 14, **dadurch gekennzeichnet, dass** es ferner Folgendes umfasst:
Messen des Stroms auf der Low-Seite des Treibers (60) in jedem der E/A-Module (30), bei denen bestimmt wurde, dass ein Kommunikationsfehler aufgetreten ist;
Vergleichen (120, 122, 124, 126) des gemessenen Stroms auf der Low-Seite des Treibers (60) in jedem der E/A-Module (30), bei denen eine Low-Seite in einem vorbestimmten Low-Bereich gemessen wurde;
Bestimmen (130), dass der Treiber (60) des jeweiligen Moduls (30) ausgefallen ist, wenn entweder der Strom auf der High-Seite des Treibers (60) außerhalb des vorbestimmten High-Bereichs liegt oder der Strom auf der Low-Seite des Treibers (60) außerhalb des vorbestimmten Low-Bereichs liegt.

16. Verfahren nach Anspruch 15, **dadurch gekennzeichnet, dass** es ferner Folgendes umfasst:
in jedem der E/A-Module (30), nachdem bestimmt wurde, dass ein Kommunikationsfehler aufgetreten ist, Bestimmen (110, 112, 114, 116), wann eine Meldung durch den Treiber (60) gesendet wird; und
wobei in jedem der E/A-Module (30), bei denen bestimmt wurde, dass ein Kommunikationsfehler aufgetreten ist, die Schritte des Messens der Ströme auf der High-Seite und der Low-Seite des Treibers (60) durchgeführt werden, wenn bestimmt wird, dass eine Meldung durch den Treiber (60) gesendet wurde; oder
ferner umfassend das Bestimmen, dass der Modulbus (22, 22a, 22b) ausgefallen ist, wenn mehr als eines der E/A-Module (30) einen Kommunikationsfehler am Modulbus (22, 22a, 22b) erkennt und bestimmt wird, dass keiner der Treiber (60) in den E/A-Modulen (30) ausgefallen ist.

## Revendications

1. Système de commande (10) destiné à commander un processus, le système de commande (10) comprenant :
un bus de module (22, 22a, 22b) sur lequel des informations peuvent être transmises ;
un module de commande (50) connecté pour communiquer sur le bus de module (22, 22a, 22b), le module de commande (50) étant programmé pour effectuer des opérations destinées à commander le processus à l'aide des données transmises sur le bus de module (22, 22a, 22b) ;
une pluralité de modules d'E/S (30) connectés pour communiquer avec le module de commande (50) sur le bus de module (22, 22a, 22b),
chaque module d'E/S (30) comportant :
un microprocesseur (34) comportant une mémoire ;
un pilote (60) destiné à envoyer des informations au bus de module (22, 22a, 22b), ledit pilote (60) présentant un côté haut connecté à une source de tension (64) et un côté bas connecté à la masse ; et
un circuit de détection (44) destiné à détecter le courant sur le côté haut du pilote (60) ;
**caractérisé en ce que** le microprocesseur (34) peut fonctionner pour exécuter des instructions exécutables par ordinateur mémorisées dans la mémoire pour effectuer un procédé de détection d'erreur de module d'E/S (100) qui comprend le fait de déterminer (102, 104, 106, 108) dans chacun des modules d'E/S (30) si une erreur de communication s'est produite sur le bus de module (22, 22a, 22b) et où il a été déterminé que l'erreur de communication s'est produite, le fait de déterminer (120, 122, 124, 126) si le courant sur le côté haut du pilote (60) mesuré par le circuit de détection (44) est à l'extérieur d'une plage haute prédéfinie et, si tel est le cas, le fait de déterminer (130, 132, 134) que le pilote (60) du module respectif (30) a échoué.

2. Système de commande (10) selon la revendication 1, **caractérisé en ce que** l'étape (102, 104, 106, 108) consistant à déterminer si une erreur de communication s'est produite sur le bus de module (22, 22a, 22b) est effectuée à l'aide d'une fonction de contrôle de redondance cyclique.

3. Système de commande (10) selon la revendication 1, **caractérisé en ce que** le circuit de détection (44) est un circuit de détection de puissance et dans lequel chaque module d'E/S (30) comporte en outre un circuit de détection de masse (46) destiné à détecter le courant sur le côté bas du pilote (60) et le procédé de détection d'erreur de module d'E/S (100) comprenant en outre le fait de déterminer (120, 122, 124, 126) si le courant sur le côté bas du pilote (60) mesuré par le circuit de détection de masse (46) est à l'extérieur d'une plage basse prédéfinie et, si tel est le cas, le fait de déterminer (130, 132, 134) que le pilote (60) a échoué.

4. Système de commande (10) selon la revendication 3, **caractérisé en ce que** le procédé de détection d'erreur de module d'E/S (100) comprend en outre le fait de déterminer (102) si une erreur de communication s'est produite sur le bus de module (22, 22a, 22b) et, si tel est le cas, la réalisation ensuite des étapes consistant à déterminer (120) si le courant sur le côté haut du pilote (60) mesuré par le circuit de détection de puissance (44) est à l'extérieur d'une plage haute prédéfinie et si le courant sur le côté bas du pilote (60) mesuré par le circuit de détection de masse (46) est à l'extérieur d'une plage basse prédéfinie.

5. Système de commande (10) selon la revendication 1, **caractérisé en ce que** le bus de module (22, 22a, 22b) est un premier bus de module (22a) ;
dans lequel le pilote est un premier pilote (60) destiné à envoyer des informations au premier bus de module (22a) et le circuit de détection (44) est un premier circuit de détection destiné à détecter le courant sur le côté haut du premier pilote (60) ;
le système de commande (10) comprenant un second bus de module (22b) ;
les modules d'E/S (30) comprenant chacun en outre :
un second pilote (60) destiné à s'interfacer avec le second bus de module (22b), le second pilote (60) présentant un côté haut connecté à la source de tension et un côté bas connecté à la masse ;
un second circuit de détection (44) destiné à détecter le courant sur le côté haut du second pilote (60) ;
le procédé de détection d'erreur de module d'E/S (100) comprenant en outre le fait de déterminer (122) si le courant sur le côté haut du second pilote (60) mesuré par le second circuit de détection (44) est à l'extérieur de la plage haute prédéfinie et, si tel est le cas, le fait de déterminer que le second pilote (60) a échoué.

6. Système de commande (10) selon la revendication 5, **caractérisé en ce que** le procédé de détection d'erreur de module d'E/S (100) comprend en outre :
l'envoi (134) d'un message d'erreur concernant la défaillance du premier pilote (60) sur le second bus de module (22b) au module de commande (50) s'il est déterminé que le premier pilote (60) a échoué ; et
l'envoi (134) d'un message d'erreur concernant la défaillance du second pilote (60) sur le premier bus de module (22a) au module de commande (50) s'il est déterminé que le second pilote (60) a échoué.

7. Système de commande (10) selon la revendication 5, **caractérisé en ce que** les premier et second circuits de détection (44) sont des premier et second circuits de détection de puissance et dans lequel chaque module d'E/S (30) comporte en outre des premier et second circuits de détection de masse (46) destinés à détecter le courant sur le côté bas des premier et second pilotes (60), respectivement, et le procédé de détection d'erreur de module d'E/S (100) comprenant en outre :
le fait de déterminer (120, 122) si le courant sur le côté bas du premier pilote (60) mesuré par le premier circuit de détection de masse (46) est à l'extérieur de la plage basse prédéfinie et, si tel est le cas, le fait de déterminer que le premier pilote (60) a échoué ; et
le fait de déterminer (124, 126) si le courant sur le côté bas du second pilote (60) mesuré par le second circuit de détection de masse (46) est à l'extérieur de la plage basse prédéfinie et, si tel est le cas, le fait de déterminer que le second pilote (60) à échoué.

8. Système de commande (10) selon la revendication 7, **caractérisé en ce que** le procédé de détection d'erreur de module d'E/S (100) comprend en outre :
le fait de déterminer (102, 104) si une erreur de communication s'est produite sur le premier bus de module (22a) et, si tel est le cas, la réalisation ensuite des étapes consistant à déterminer (120, 122) si le courant sur le côté haut du premier pilote (60) mesuré par le premier le circuit de détection de puissance est à l'extérieur de la plage haute prédéfinie et si le courant sur le côté bas du premier pilote (60) mesuré par le premier circuit de détection de masse (46) est à l'extérieur de la plage basse prédéfinie ; et
le fait de déterminer (106, 108) si une erreur de communication s'est produite sur le second bus de module (22b) et, si tel est le cas, la réalisation ensuite des étapes consistant à déterminer (124, 126) si le courant sur le côté haut du second pilote (60) mesuré par le second le circuit de détection de puissance est à l'extérieur de la plage haute prédéfinie et si le courant sur le côté bas du second pilote (60) mesuré par le second circuit de détection de masse (46) est à l'extérieur de la plage basse prédéfinie.

9. Système de commande (10) selon la revendication 8, **caractérisé en ce que** le module de commande (50) comprend :
un microprocesseur (33) comportant une mémoire ;
des premier et second pilotes (60) destinés à s'interfacer avec les premier et second bus de module (22a, 22b) respectivement, chacun des premier et second pilotes (60) présentant un côté haut connecté à une source de tension et un côté bas connecté à la masse ;
un premier circuit de détection de puissance (44) destiné à détecter un courant sur le côté haut du premier pilote (60) ;
un circuit de détection de masse (46) destiné à détecter un courant sur le côté bas du pilote (60) ; et
le microprocesseur (33) pouvant fonctionner pour exécuter des instructions exécutables par ordinateur mémorisées dans la mémoire pour effectuer un procédé de détection d'erreur de module de commande (100, 150) qui comprend :
le fait de déterminer (102, 104, 106, 108) si des erreurs de communication se sont produites sur les premier et second bus (22a, 22b), respectivement ;
le fait de déterminer (120, 122) si le courant sur le côté haut du premier pilote (60) mesuré par le premier circuit de détection de puissance (44) est à l'extérieur d'une plage haute prédéfinie si une erreur de communication s'est produite sur le premier bus (22a) ;
le fait de déterminer (120, 122) si le courant sur le côté bas du premier pilote (60) mesuré par le premier circuit de détection de masse (46) est à l'extérieur d'une plage basse prédéfinie si une erreur de communication s'est produite sur le premier bus (22a) ;
le fait de déterminer (130, 132, 134) que le premier pilote (60) a échoué si le courant sur le côté haut du premier pilote (60) est à l'extérieur de la plage haute prédéfinie ou si le courant sur le côté bas du premier pilote (60) est à l'extérieur de la plage basse prédéfinie ;
le fait de déterminer (124, 126) si le courant sur le côté haut du second pilote (60) mesuré par le second circuit de détection de puissance est à l'extérieur de la plage haute prédéfinie si une erreur de communication s'est produite sur le second bus (22b) ;
le fait de déterminer (124, 126) si le courant sur le côté bas du second pilote (60) mesuré par le second circuit de détection de masse (46) est à l'extérieur de la plage basse prédéfinie si une erreur de communication s'est produite sur le second bus (22b) ; et
le fait de déterminer (130, 132, 134) que le second pilote (60) a échoué si le courant sur le côté haut du second pilote (60) est à l'extérieur de la plage haute prédéfinie ou si le courant sur le côté bas du second pilote (60) est à l'extérieur de la plage basse prédéfinie.

10. Système de commande (10) selon la revendication 1, **caractérisé en ce que** le bus de module (22, 22a, 22b) comprend un premier bus de module (22a) et un second bus de module (22b) sur lesquels des informations peuvent être transmises, le module de commande (50) étant connecté pour communiquer sur les premier et second bus de module (22a, 22b) et programmé pour effectuer des opérations destinées à commander le processus à l'aide des données transmises sur un ou plusieurs parmi les premier et second bus de module (22a, 22b) ; et
la pluralité de modules d'E/S (30) étant connectés pour communiquer avec le module de commande (50) sur les premier et second bus de module (22a, 22b) ;
le module de commande (50) comprenant :
un microprocesseur (33) comportant une mémoire ;
un pilote (60) destiné à envoyer des informations au premier bus de module (22a) et présentant un côté haut connecté à une source de tension et un côté bas connecté à la masse ; et
un circuit de détection (44) destiné à détecter le courant sur le côté haut du pilote (60) ;
le circuit de détection (44) de chaque module d'E/S (30) et du module de commande (50) étant un circuit de détection de puissance ;
chaque module d'E/S (30) et le module de commande (50) comprenant en outre un circuit de détection de masse (46) destiné à détecter le courant sur le côté bas du pilote (60) ; et
le microprocesseur (33) du module de commande (50) pouvant fonctionner pour exécuter des instructions exécutables par ordinateur mémorisées dans la mémoire pour effectuer un procédé de détection d'erreur de module (150) qui comprend :
le fait de déterminer (102, 104) si une erreur de communication s'est produite sur le premier bus de module (22a) ;
si une erreur de communication s'est produite sur le premier bus de module (22a), le fait de déterminer (120, 122) si le courant sur le côté haut du pilote (60) mesuré par le circuit de détection de puissance (44) est à l'extérieur d'une plage haute prédéfinie et si le courant sur le côté bas du pilote (60) mesuré par le circuit de détection de masse (46) est à l'extérieur d'une plage basse prédéfinie ; et
s'il est déterminé que le courant sur le côté haut du pilote (60) est à l'extérieur de la plage haute prédéfinie ou s'il est déterminé que le courant sur le côté bas du pilote (60) est l'extérieur de la plage basse prédéfinie, le fait de déterminer (130) que le pilote (60) a échoué.

11. Système de commande (10) selon la revendication 10, **caractérisé en ce que** le procédé de détection d'erreur de module (100) dans les modules d'E/S (30) comprend en outre :
l'envoi (134) d'un message d'erreur au module de commande (50) sur le second bus de module (22b) s'il est déterminé que le pilote (60) a échoué ; et
l'envoi d'un message d'état (136) au module de commande (50) sur le second bus de module (22b) s'il est déterminé que le pilote (60) n'a pas échoué.

12. Système de commande (10) selon la revendication 11, **caractérisé en ce qu'**il comprend en outre une station de travail (58) comprenant une interface utilisateur graphique et dans lequel le microprocesseur (33) dans le module de commande (50) exécute des instructions exécutables par ordinateur mémorisées dans la mémoire pour effectuer un procédé de détection d'erreur système (150) qui comprend :
le fait de déterminer (152) si une erreur de communication s'est produite sur le premier bus de module (22a) ;
le fait de déterminer (158) si des messages d'erreur ont été reçus et s'il est déterminé que le pilote (60) du module de commande (50) a échoué si une erreur de communication a été déterminée comme s'étant produite ;
le fait de déterminer (160) si des messages d'état ont été reçus s'il est déterminé qu'aucun message d'erreur n'a été reçu et que le pilote (60) du module de commande (50) n'a pas échoué ;
le fait de déterminer (162) que le premier bus de module (22a) a échoué s'il est déterminé qu'un ou plusieurs messages d'état ont été reçus ; et
l'envoi (170) d'un message à la station de travail (58) indiquant qu'il a été déterminé que le bus de module (22a) a échoué.

13. Système de commande (10) selon la revendication 12, **caractérisé en ce que** le module de commande (50) et les modules d'E/S (30) comprennent chacun en outre un récepteur (60) destiné à recevoir des informations en provenance du premier bus de module (22a) et dans lequel le procédé de détection d'erreur système (150) comprend en outre :
le fait de déterminer (156) que le récepteur (60) du module d'E/S (30) a échoué s'il est déterminé qu'une erreur de communication ne s'est pas produite et qu'il est déterminé qu'un message d'état a été reçu en provenance d'un module d'E/S (30) ; et
l'envoi (170) d'un message à la station de travail indiquant qu'il a été déterminé que le récepteur (60) du module d'E/S (30) a échoué.

14. Procédé de détection d'erreurs dans un système de commande de processus (10) présentant une pluralité de modules d'E/S (30) connectés pour communiquer sur un bus de module (22, 22a, 22b), chaque module d'E/S (30) a un pilote (60) destiné à envoyer des informations au bus de module (22, 22a, 22b) et a un côté haut connecté à une source de tension (64) et un côté bas connecté à la masse, le procédé étant **caractérisé en ce qu'**il comprend :
le fait de déterminer (102, 104, 106, 108) dans chacun des modules d'E/S (30) si une erreur de communication s'est produite sur le bus de module (22, 22a, 22b) ;
la mesure du courant sur le côté haut du pilote (60) dans chacun des modules d'E/S (30) où il a été déterminé qu'une erreur de communication s'est produite ;
la comparaison (120, 122, 124, 126) du courant mesuré sur le côté haut du pilote (60) dans chacun des modules d'E/S (30) où une mesure du côté haut a été effectuée à une plage haute prédéfinie ; et
le fait de déterminer (130) que le pilote (60) du module d'E/S respectif (30) a échoué si le courant sur le côté haut du pilote (60) est à l'extérieur de la plage haute prédéfinie.

15. Procédé selon la revendication 14, comprenant en outre :
la mesure du courant sur le côté bas du pilote (60) dans chacun des modules d'E/S (30) où il a été déterminé qu'une erreur de communication s'est produite ;
la comparaison (120, 122, 124, 126) du courant mesuré sur le côté bas du pilote (60) dans chacun des modules d'E/S (30) où une mesure du côté bas a été effectuée à une plage basse prédéfinie ;
le fait de déterminer (130) que le pilote (60) du module respectif (30) a échoué si soit le courant sur le côté haut du pilote (60) est à l'extérieur de la plage haute prédéfinie, soit le courant sur le côté bas du pilote (60) est à l'extérieur de la plage basse prédéfinie.

16. Procédé selon la revendication 15, **caractérisé en ce qu'**il comprend en outre :
dans chacun des modules d'E/S (30), après qu'il a été déterminé qu'une erreur de communication s'est produite, le fait de déterminer (110, 112, 114, 116) quand un message est envoyé par le pilote (60) ; et
dans chacun des modules d'E/S (30) où il a été déterminé qu'une erreur de communication s'est produite, les étapes de mesure des courants sur les côtés haut et bas du pilote (60) étant effectuées lorsqu'il est déterminé qu'un message a été envoyé par le pilote (60) ; ou
comprenant en outre le fait de déterminer que le bus de module (22, 22a, 22b) a échoué si plus d'un des modules d'E/S (30) détecte une erreur de communication sur le bus de module (22, 22a, 22b) et s'il est déterminé qu'aucun des pilotes (60) dans les modules d'E/S (30) n'a échoué.
